(19) Europäisches Patentamt
European Patent Office
Office européen des brevets

(11) EP 3 854 275 A1

(12) EUROPEAN PATENT APPLICATION

(43) Date of publication:
28.07.2021 Bulletin 2021/30

(51) Int Cl.:
A47J 31/52 (2006.01)

(21) Application number: 21152472.3

(22) Date of filing: 20.01.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.01.2020 IT 202000001159

(71) Applicant: Gruppo Cimbali S.p.A.
20082 Binasco (MI) (IT)

(72) Inventors:
• Dallera, Mario
20082 Binasco MI (IT)
• Gatti, Luca Attilio Maria
20082 Binasco MI (IT)

(74) Representative: Perani & Partners S.p.A.
Piazza Armando Diaz, 7
20123 Milano (IT)

(54) **METHOD OF CONTROLLING THE OUTFLOW OF THE AMOUNT OF WATER REQUIRED TO FORM A GIVEN DOSE OF A BEVERAGE OBTAINED FROM GROUND COFFEE AS IT IS BEING DISPENSED INTO A CUP AND APPARATUS FOR CARRYING OUT SUCH METHOD**

(57) A method and an apparatus for controlling and regulating the amount of the water required to form a given dose of a beverage obtained from ground coffee, as it is being dispensed into a cup, so that the dispensed dose will match the target dose.

The method accounts for a variety of technological factors that influence dispensing of a given beverage dose, such as, for example, the hydroscopic degree of the ground coffee in the filter, the particle size of the ground coffee panel accommodated in the filter, as well as the structural characteristics of the hydraulic circuit through which the beverage-preparing water is being fed. The apparatus comprises, in a machine (1) for preparing coffee-based beverages, a panel (10) for selecting the type of beverage to be dispensed into a cup, a hot water generator (2), an electric pump (3), a brewing unit (4), a flow meter (5) located between said electric pump (3) and said brewing unit (4), said electric pump (3) being provided to feed hot water to said brewing unit (4), a valve device (6) placed on the hydraulic connection between said electric pump (3) and said brewing unit (4) to shut off or actuate delivery of hot water, an electronic control unit (7), a member (8) for weighing said cup and its contents dispensed by said brewing unit (4).

Said electronic control unit (7) is configured to shut off delivery of hot water to said brewing unit (4) as said weighing member (8) receives a signal corresponding to the stored stop weight value (PS) which corresponds to the total weight (PT) of the type of beverage selected on the selection panel (10) of the machine (1), minus the residual weight (PR).

Fig. 1

## Description

*Field of the invention*

The present invention relates to a method of controlling, in a machine for preparing coffee-based beverages, the outflow of the amount of the water required to form a given dose of a beverage obtained from ground coffee, as it is being dispensed into a cup, so that the dispensed dose will actually match the selected target dose.

In coffee-based beverage preparation, machines are known to be widely used in which the beverage-preparing apparatus consists of a hot water generator, an electric pump (3), a brewing unit (4), and a valve unit located between the electric pump and the brewing unit, to intercept the flow of hot water from the brewing unit and shutting it off when a given amount of beverage has been reached in the cup.

For this purpose, in one technology of the prior art, coffee machines also include either a device for determining the weight of the dose in the cup or a flow meter for measuring the volume flow rate, that can be converted to mass flow rate if needed, of the flow into the cup, to determine in the overall amount of the dose.

Coffee machines also include a control unit that manages the various operating steps and hence the entire beverage preparation process.

*Background art*

As described in DE 3,332,236 A1, the beverage preparation machine comprises a scale on which the beverage collecting cup is placed. The scale is connected with a microprocessor which detects its signal. When the beverage in the cup reaches the predetermined weight, as stored in the microprocessor, the corresponding signal and the microprocessor stop delivery of the beverage-forming water by shutting off a valve member located in the relevant conduit.

In a further technique of the prior art, as disclosed for instance in EP 3,162,256 A1, in WO 2016 147 026 A1 and in WO 2015 055 342 A1, beverage dispensing is stopped when the weight of the liquid in the collecting cup is such that the brew ratio, i.e. the ratio of the dose of ground coffee powder that has been used to make the beverage to the weight of the liquid coffee in the cup, reaches a predetermined value, that is stored in the electronic control unit of the machine.

The common principle underlying the method of the prior art, as previously documented, lies in that delivery of beverage-forming water is stopped as soon as a particular value of a given parameter stored in the control unit of the machine is attained, without considering that part of the beverage-forming water is contained in the hydraulic circuit downstream from the location in which the flow is shut-off, and in particular in the coffee panel accommodated in the filter as well as in the dispensing conduits of the portafilter, and hence flows into the cup as a residue, thereby altering the desired target dose. Furthermore, since water delivery is always shut-off by a three-way valve member, when water flow is shut off, the water downstream from the valve member is not entirely channeled toward the drain to be drained off, as a part of it may flow out toward the cup and a part of it, referred to as saturation water, is still present in the apparatus downstream from the valve member because it was received therein after a given time since the start of delivery. As a result, the amount of beverage that is actually in the cup does not match the desired target amount, as defined according to the selected type of beverage.

*Object of the Invention*

The object of the present invention is to provide a method to stop delivery of the beverage-forming water as soon as a given amount of coffee has been dispensed in the cup, that also accounts for coffee residue that follows, so that the desired target dose is not exceeded in the cup. A further object of the invention is to provide an apparatus that can fulfill the need to obtain the exact desired dose of coffee in the cup, matching the target dose defined by the type of coffee selected and set in the coffee machine.

These and other objects, as better explained hereinafter, are fulfilled by the method as defined in the accompanying claim 1.

*Brief description of the drawings*

The invention will be now further described with reference to a preferred embodiment thereof, given by way of illustration and without limitation, and shown in the annexed drawings, in which:

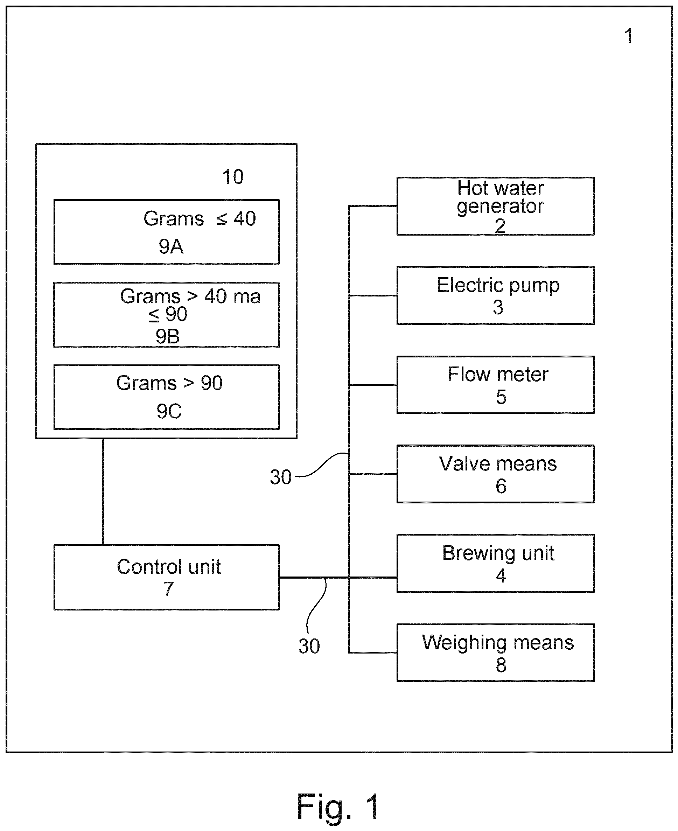

- Figure 1 shows a functional diagram of the components of the apparatus for carrying out the method of the invention.

*Detailed Description of the invention*

Referring to Figure 1, the apparatus, generally referenced 1, comprises a hot water generator 2, an electric pump 3 which connects, via a conventional hydraulic connection, said hot water generator 2 to the brewing unit 4 in which the coffee beverage is formed from a predetermined dose of coffee, ground with a given particle size, and accommodated in a conventional filter, not shown.

The prepared beverage is collected in a conventional cup, not shown in the schematic drawing of Figure 1.

The hydraulic connection 30 has a flow meter device 5 and a valve device 6 therein, the latter being used to permit or shut off the flow of hot water from the generator 2, as controlled by a conventional electronic control unit, as shown in block 7, in which the types of beverage to be dispensed into the cup are stored in the form of specific weight or volume dose measures. Conventionally, the valve device 6 is a three-way valve, one way being directed toward the drain of the machine.

In combination with the brewing unit 4, the apparatus of the invention has a weighing unit 8 which senses the value of the amount of beverage which, after being dispensed by the brewing unit 4, flows into the collecting cup.

This weight value of the amount of beverage received in the cup, as sensed by the weighing member 8, is addressed to the control unit 7 where it is compared with the desired value, as stored therein, for the dose corresponding to the selected type of beverage.

The beverage type is selected by means of the push-buttons 9A, 9B, or 9C of the control panel 10 of the machine 1.

If the value stored in the electronic control unit 7 marches the value sent by the weighing unit 8, as sensed in the beverage collecting cup, then the control unit 7 acts on the valve device 6 to shut off the flow of hot water to the brewing unit 4. However, since an amount of brewing water is present downstream from the flow shut-off location, i.e. downstream from the valve device 6, namely inside the coffee panel accommodated in the filter, once the valve device 6 has been closed, such amount flows into the cup as a residue, and alters the final dose.

Therefore, since the final dose would no longer match the desired dose, according to the invention, the electronic control unit 7 is designed to issue the command to shut off the flow of hot brewing water, while also accounting for the residual coffee that, since the time delivery was stopped, has still reached the cup.

This will obviate the drawback of the desired target dose being exceeded.

Generally, with PR designating the residual weight which, after shutting off water delivery, is still added to the amount of beverage that has already been received in the cup and PT designating the total or target weight of beverage that is expected to be in the cup for the given type of beverage desired and selected on the panel 10 of the machine 1, the stop weight PS of the beverage in the cup, at which the electronic control unit 7 must stop delivery of brewing water by acting on the valve device 6, is represented by the formula:

$$PS = PT - PR$$

The residual weight PR in the above formula shall be deemed to consist of at least one component, PSAT, known as saturation component, which is measured and expressed in weight units by the flow meter device 5 of the apparatus of Fig. 1 in the time interval elapsing from the start of delivery to the fall of the first drops of coffee into the cup. Nevertheless, in practice, the residual weight PR also comprises a further component, PR1, which represents the water contained in the entire hydraulic system downstream from the three-way valve unit, when the latter is closed, and is not channeled through the third way connected to the drain and eventually flows into the cup. Therefore, this component PSAT of the residual weight PR consists of a dynamic value because it is determined of the conditions of the dose of ground product.

Changes in the dose, particle size, moisture content and aging of the grounds will lead to changes in the PSAT value because the first coffee drops fall into the cup at different times and hence also to changes in volume measurement, possibly expressed by weight, performed by the flow meter 5 and sent to the CPU.

While the component PR1 of the residual weight PR also changes according to the hygroscopic degree and the particle size of the ground coffee panel, it mainly depends on the configuration of the hydraulic circuit downstream from the valve device 6.

Therefore, whether the residual part PR1 of the residual weight PR can be neglected or not depends on the type of recipe with which the selected beverage is to be made.

The Applicant found that, for a beverage type consisting of a total weight or target PT ranging from 40 to 90 grams of liquid such as, for example, double espresso, long espresso, short filter coffee, the residual weight value PR for determining the stop weight PS should be deemed to be generally equal to 0.1x PSAT whereas, for a beverage type consisting of a total weight or target PT exceeding 90 grams of liquid, such as for example American coffee, coffee creams and the like, the value of the residual weight PR for determining the stop weight PS should be deemed to be generally equal to 0.16xPSAT.

Only when beverage type selected for dispensing has a total or target weight (PT) of less than 40 grams of liquid, such as in the case of concentrated espresso, double concentrated espresso, long espresso, is the value of said residual weight (PR) calculated at the time the weight of the coffee in the cup reaches a predetermined percentage of the total or target weight (PT) of the beverage to be dispensed and said residual weight value (PR) is equal to the value of the total weight of the water dispensed to that time, minus the saturation weight (PSAT) minus the weight of the coffee in the cup.

In particular, the aforementioned percentage by weight is selected at a value ranging from 60% to 75% of the target weight PT, preferably 70%.

This is possible and practically acceptable since the delivery flow through the coffee panel accommodated in the filter may be considered a steady-state fluid flow, not exposed to turbulence, unlike types involving higher total weights for the beverage to be dispensed.

It will be understood from the foregoing that the control unit 7 must be configured to store, for each total weight or target weight PT of the type of beverage selected on the operating panel 10 of the coffee machine, a corresponding stop weight PS. Thus, when this weight is attained in the coffee dispensed in the cup, the weighing unit 8 notifies the control unit 7 and the latter stops delivery of hot brewing water, to allow the total weight PT to be reached by further addition of an amount of liquid corresponding to the residual weight PR in the cup.

**Claims**

1. A method of controlling the outflow of the amount of water required to form a given dose of a beverage obtained from ground coffee, accommodated in a filter, as it is being dispensed into a cup, comprising a step of determining the total or target weight (PT) of the beverage to be dispensed into the cup, a step of determining the residual weight (PR) flowing into the cup after brewing water feeding has been stopped, **characterized in that** it comprises an additional step of determining a stop weight (PS) at which the flow of the beverage brewing water is shut off, said stop weight (PS) being equal to (PT) - (PR) and being stored in an electronic control unit to control brewing water shut off.

2. A method as claimed in claim 1, **characterized in that** said residual weight (PR) comprises at least one portion (PSAT) that is representative of the amount of water that is being measured and expressed in weight units during the time interval between actuation of delivery and the fall of the first drops of coffee into the cup.

3. A method as claimed in claims 1 and 2, **characterized in that** the determination of said residual weight is expressed as PR = 0,1 PSAT, if the total or target weight (PT) of the beverage to be dispensed into the cup ranges from 40 to 90 grams of liquid.

4. A method as claimed in claims 1 and 2, **characterized in that** the determination of said residual weight is expressed as PR = 0,16 PSAT, if the total or target weight (PT) of the beverage to be dispensed into the cup exceeds 90 grams of liquid.

5. A method as claimed in claims 1 and 2, **characterized in that**, if the total or target weight (PT) of the beverage to be dispensed into the cup is less than 40 grams of liquid, the value of said residual weight (PR) is calculated at the time the weight of the coffee in the cup reaches a predetermined percentage of the total or target weight (PT) of the beverage to be dispensed and said residual weight value (PR) is equal to the value of the total weight of the water delivered to that time, minus the saturation weight (PSAT) minus the weight of the coffee in the cup.

6. A method as claimed in claim 5, **characterized in that** said predetermined percentage is selected in a range from 60% to 75%.

7. An apparatus for carrying out the method as claimed in any of claims 1 to 6, comprising, in a machine (1) for preparing coffee-based beverages, a panel (10) for selecting the type of beverage to be dispensed into a cup, a hot water generator (2), an electric pump (3), a brewing unit (4), a flow meter (5) located between said electric pump (3) and said brewing unit (4), said electric pump (3) being provided to feed hot water to said brewing unit (4), a valve device (6) placed on the hydraulic connection between said electric pump (3) and said brewing unit (4) to shut off or actuate delivery of hot water, an electronic control unit (7), a member (8) for weighing said cup and its contents dispensed by said brewing unit (4), **characterized in that** said electronic control unit (7) is configured to shut off delivery of hot water to said brewing unit (4) as said weighing member (8) receives a signal corresponding to the stored stop weight value (PS) which corresponds to the total or target weight (PT) of the type of beverage selected on the selection panel (10) of the machine (1), minus the residual weight (PR).

8. An apparatus as claimed in claim 7, wherein said beverage selection panel (10) comprises buttons (9A, 9B, 9C) for selecting beverages having a respective total weight (PT) in the cup that is less than or equal to 40 grams of liquid, a total weight (PT) in the cup that ranges from 41 to 90 grams of liquid and a total weight (PT) in the cup that is equal to or more than 90 grams of liquid.

Fig. 1

Europäisches
Patentamt

European
Patent Office

Office européen
des brevets

# EUROPEAN SEARCH REPORT

Application Number

EP 21 15 2472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/289712 A1 (CHOI SUN-HO [KR]) 15 October 2015 (2015-10-15) | 1,2,7 | INV. A47J31/52 |
| A | * paragraphs [0003], [0057], [0162]; claims; figures * | 3-6,8 | |
| A | US 2015/157039 A1 (NOSLER ZANDER [US] ET AL) 11 June 2015 (2015-06-11) * paragraph [0090] - paragraph [0096]; figures * | 1-8 | |
| A | US 2018/255962 A1 (VETTERLI HEINZ [CH] ET AL) 13 September 2018 (2018-09-13) * paragraph [0047]; claims; figures * | 1-8 | |

TECHNICAL FIELDS
SEARCHED      (IPC)

A47J

The present search report has been drawn up for all claims

| Place of search | Date of completion of the search | Examiner |
|---|---|---|
| Munich | 19 April 2021 | Acerbis, Giorgio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 854 275 A1

## ANNEX TO THE EUROPEAN SEARCH REPORT
## ON EUROPEAN PATENT APPLICATION NO.

EP 21 15 2472

19-04-2021

| Patent document cited in search report | | Publication date | Patent family member(s) | | Publication date |
|---|---|---|---|---|---|
| US 2015289712 | A1 | 15-10-2015 | CN | 105030068 A | 11-11-2015 |
| | | | JP | 6564760 B2 | 21-08-2019 |
| | | | JP | 2015202405 A | 16-11-2015 |
| | | | JP | 2017094107 A | 01-06-2017 |
| | | | KR | 101468906 B1 | 05-12-2014 |
| | | | US | 2015289712 A1 | 15-10-2015 |
| US 2015157039 | A1 | 11-06-2015 | AT | 532440 T | 15-11-2011 |
| | | | BR | PI0616092 A2 | 07-06-2011 |
| | | | CN | 101641039 A | 03-02-2010 |
| | | | ES | 2375550 T3 | 01-03-2012 |
| | | | HK | 1125008 A1 | 31-07-2009 |
| | | | US | 2009095165 A1 | 16-04-2009 |
| | | | US | 2010154645 A1 | 24-06-2010 |
| | | | US | 2011088560 A1 | 21-04-2011 |
| | | | US | 2013156904 A1 | 20-06-2013 |
| | | | US | 2014106042 A1 | 17-04-2014 |
| | | | US | 2015157039 A1 | 11-06-2015 |
| | | | WO | 2007027206 A2 | 08-03-2007 |
| US 2018255962 | A1 | 13-09-2018 | AU | 2016323257 A1 | 05-04-2018 |
| | | | BR | 112018005280 A2 | 09-10-2018 |
| | | | CA | 2998562 A1 | 23-03-2017 |
| | | | CN | 108024661 A | 11-05-2018 |
| | | | DE | 102015217999 A1 | 23-03-2017 |
| | | | EP | 3349626 A1 | 25-07-2018 |
| | | | ES | 2807442 T3 | 23-02-2021 |
| | | | HK | 1248490 A1 | 19-10-2018 |
| | | | HU | E050277 T2 | 30-11-2020 |
| | | | JP | 2018528837 A | 04-10-2018 |
| | | | KR | 20180054769 A | 24-05-2018 |
| | | | PL | 3349626 T3 | 02-11-2020 |
| | | | RU | 2018110561 A | 26-09-2019 |
| | | | US | 2018255962 A1 | 13-09-2018 |
| | | | WO | 2017046100 A1 | 23-03-2017 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3332236 A1
- EP 3162256 A1
- WO 2016147026 A1
- WO 2015055342 A1